# EUROPÄISCHE PATENTANMELDUNG

(11) **EP 4 621 509 A1**
(43) Veröffentlichungstag der Anmeldung: **24.09.2025**
(21) Anmeldenummer: 24165070.4
(22) Anmeldetag: 21.03.2024
(51) Int. Cl.: G05B 19/418

(54) **VERFAHREN UND VORRICHTUNG ZUR VERTEILTEN DURCHFÜHRUNG EINER AUTOMATISIERUNGSSTEUERUNG, SOWIE COMPUTERPROGRAMMPRODUKT**

(71) Anmelder: Siemens Aktiengesellschaft, 80333 München (DE)
(72) Erfinder: Mayer, Hermann Georg, 83209 Prien am Chiemsee (DE)
(74) Vertreter: Siemens Patent Attorneys

(57) **Zusammenfassung**

Die Erfindung betrifft eine Vorrichtung und Vorrichtung zur verteilten Durchführung einer Automatisierungssteuerung, teilweise in der Cloud.

Klassische Automatisierungslösungen laufen in der Regel auf einer speicherprogrammierbaren Steuerung SPS ein Gerät, das zur Steuerung oder Regelung einer Maschine oder Anlage (11) eingesetzt wird.

Durch das Verfahren und die Vorrichtung (12) wird zum einen eine Simulation ermöglicht, welche in der Cloud (300) abläuft, da hier beliebig Rechenkapazität zur Verfügung gestellt werden kann, was in der Anlage je nach Art der eingesetzten Geräte häufig nicht der Fall ist.

Die Voraus-Berechnung der Simulation um jeweils mehrere Schritte sorgt dabei dafür, dass auch bei einer kurzfristigen Unterbrechung der Kommunikation, währenddessen ggf. ein Simulationsergebnis nicht rechtzeitig in der Anlage ankommt, dennoch ein Steuerungsprogramm vorliegt, so dass die Anlage störungsfrei weiterarbeiten kann.

## Beschreibung

Klassische Automatisierungslösungen laufen in der Regel auf einer speicherprogrammierbaren Steuerung SPS oder auch Programmable Logic Controller, PLC genannt, ein Gerät, das zur Steuerung oder Regelung einer Maschine oder Anlage eingesetzt und auf digitaler Basis programmiert wird.

Eine speicherprogrammierbare Steuerung hat im einfachsten Fall Eingänge, Ausgänge, ein Betriebssystem und eine Schnittstelle, über die das Anwenderprogramm geladen werden kann. Das Anwenderprogramm legt fest, wie die Ausgänge in Abhängigkeit von den Eingängen oder von dem internen Zustand geschaltet werden sollen. Optional ist die Software mit einer SCADA-Schicht (Supervisory Control and Data Acquisition) zur Datenaggregation mit der Hardware verbunden. SPS-Geräte werden in der Regel wie Standardcomputer implementiert, die aus einer CPU und verschiedenen Schichten von Speicheroptionen bestehen. Der Automatisierungscode wird auf das Gerät heruntergeladen und dann lokal auf der SPS ausgeführt.

Die SPS weist üblicherweise eine Zykluszeit auf, das ist die Zeit für die Abarbeitung eines Bearbeitungs-Zyklus einschließlich aller Kommunikationsaufgaben. Sie ist abhängig von der Rechenzeit für das Programm, also abhängig von der Zahl der Anweisungen. Höherpriorisierte Tasks unterbrechen den Zyklus und verlängern damit die Zykluszeit.

Wird Hard- und/oder Software entwickelt, die mit einer SPS interagieren soll, sollte die reale SPS für den Entwicklungsprozess zur Verfügung stehen, was aber häufig nicht möglich ist.

Auch eine realitätsnahe Simulation des SPS-Verhaltens ist denkbar, oder es muss eine Simulationsumgebung aufgebaut werden, um die reale SPS zu emulieren. All dies verursacht zusätzlichen Aufwand und Kosten in einer Situation, in der viele Entwickler remote und parallel an Automatisierungsprojekten arbeiten. Daher muss in der Regel für jeden Entwicklerplatz eine SPS-Simulation eingerichtet und gepflegt werden. Entwickler sollten sich jedoch in der Regel auf andere Aufgaben als die Wartung der Automatisierungssimulation konzentrieren.

Darüber hinaus erschwert diese Konfiguration auch eine zentrale Verwaltung von Automatisierungscode, da klassische Automatisierungscode- und SPS-Simulatoren nicht gut in bekannte Versionskontrollsysteme integriert sind.

Ein weiterer Aspekt betrifft die Code-Sicherheit: Große Automatisierungsprojekte umfassen in der Regel viele Unterteams und es ist oft nicht wünschenswert, den Automatisierungsquellcode mit allen Teams zu teilen, und auch in dieser Situation ist die Wartung und Verteilung von kompiliertem Code (um die gemeinsame Nutzung des Quellcodes zu vermeiden) mühsam.

Es gibt bereits neue Entwicklungen, um die oben genannten Herausforderungen der aktuellen Standards für die Entwicklung von Automatisierungslösungen zu überwinden.

Beispielsweise kann ein Simulationssystem für SPS als Dienstleistung zur Verfügung gestellt werden, etwa als Cloud-Version, um eine zentrale Lösung für die virtuelle Inbetriebnahme zu ermöglichen. Diese Lösung erfordert jedoch immer noch eine lokale Einrichtung am Computer des Entwicklers und ist für Nicht-Experten immer noch nicht einfach zu bedienen. Darüber hinaus wird der Cloud-Service nur für die virtuelle Inbetriebnahme und Schulung angeboten, ist aber nicht für die Durchführung realer Automatisierungsprojekte gedacht. Es erfordert eine schnelle Internetverbindung, die den nächsten Satz von Signalen innerhalb der Zykluszeit des Geräts (in der Regel einige Millisekunden) liefern kann.

Ein weiterer Ansatz, der derzeit verfolgt wird, ist die sogenannte "Software-Defined Control", inspiriert von dem bereits bekannten "Software-Defined Networking". Die Entwicklung und Bereitstellung von Automatisierungscode (Quellcode) wird so geändert, dass er sich besser in Standard-Softwareentwicklungsprozesse (wie CI/CD, Versionierung und Tests) integrieren lässt. Der Code wird jedoch weiterhin auf Automatisierungsgeräten ausgeführt. Daher werden dadurch immer noch einige der genannten Probleme (wie die Vermeidung lokaler Softwarewartung und das Ausführen von SPS-Code an einem zentralen Ort) nicht gelöst.

Es ist daher Aufgabe der Erfindung, eine Möglichkeit anzugeben, welche die Ausführung einer Steuerungs-Software verteilt auf einer speicherprogrammierbaren Steuerung und in der Cloud ermöglicht.

Die Berechnung und die Ausführung der Automatisierungslogik werden in zwei separate Module aufgeteilt, im Gegensatz zu klassischen Steuerungen, wo alles auf demselben Gerät abläuft.

Die Aufgabe wird gelöst durch eine Vorrichtung gemäß den Merkmalen des Patentanspruchs 1.

Die Aufgabe wird gelöst durch ein Verfahren gemäß den Merkmalen des unabhängigen Patentanspruchs 10 und durch ein Computerprogrammprodukt mit den Merkmalen des Patentanspruchs 19.

Weitere Ausführungsformen der Erfindung werden in den Unteransprüchen beschrieben.

Die Vorrichtung und das Verfahren zur verteilten Durchführung eine Automatisierungssteuerung mit einem Automatisierungscode mit Ausführungsschritten, für eine industrielle Anlage weist eine Kontrollebene auf, mit einem Berechnungs-Modul für die Berechnung der nächsten Schritte des Automatisierungsverhaltens, in Form von Statuswerten.

Das Berechnungs-Modul ist dabei außerhalb der industriellen Anlage angeordnet, insbesondere in einer Cloud Umgebung.

Es wird zumindest eine funktional unabhängige Teilmenge im Automatisierungscode identifiziert und für jede identifizierte funktional unabhängige Teilmenge werden dann durch das Berechnungsmodul mehrere Ausführungsschritte des Automatisierungscodes im Voraus zu berechnet und als Signaldatensatz abgespeichert.

Für jede funktional unabhängige Teilmenge des Automatisierungscodes werden im Automatisierungssteuerung-Status mögliche Folgekonfigurationen mit dem Automatisierungscode simuliert, für die nächsten Ausführungsschritte der Automatisierungssteuerung. Unter einer Folgekonfiguration wird dabei in der Anmeldung entweder die Übertragung der tatsächlichen Werte verstanden oder in einer weiteren Ausführungsform die lediglich die Übertragung der Differenzen, also nur derjenigen Werte, die sich tatsächlich ändern.

Danach wird ein Signaldatensatz mit den berechneten Werten an ein Ausführungs-Modul gesendet, das dafür eingerichtet und ausgebildet ist, den Signaldatensatz vom Berechnungsmodul zu empfangen und in der industriellen Anlage auszuführen.

Durch das erfindungsgemäße Vorgehen wird zum einen eine Simulation ermöglicht, welche beispielsweise in der Cloud abläuft, da hier beliebig (nach Bedarf) Rechenkapazität zur Verfügung gestellt werden kann, was in der Anlage ("Shopfloor") je nach Art der eingesetzten Geräte ("Edge") nicht unbedingt der Fall ist.

Umgekehrt sorgt die Voraus-Berechnung der Simulation um jeweils mehrere Schritte dafür, dass auch bei einer kurzfristigen Unterbrechung der Kommunikation, währenddessen ggf. ein Simulationsergebnis nicht rechtzeitig ("Echtzeit") in der Anlage ankommt, dennoch ein vernünftiges Steuerungsprogramm vorliegt, so dass die Anlage weiterarbeiten kann.

Durch die Clusterung von funktional zusammenhängenden Teilmengen im Code wird die Simulation über mehrere Schritte dabei wesentlich vereinfacht, da nicht alle möglichen Kombinationen überprüft werden müssen, sondern nur solche, die auch sinnvoll sind.

Zur Ermittlung der funktional unabhängigen Teilmengen gibt es dabei verschiedene Möglichkeiten. Es kann die Information zu der industriellen Anlage aus verfügbaren Engineering-Daten errechnet werden, oder auch aus Verkabelungsplänen oder anderen Plänen der Anlage.

Wenn solche Daten nicht zur Verfügung stehen, was bei älteren Anlagen durchaus der Fall sein kann, dann kann die Ableitung der funktional unabhängigen Teilmengen auch durch Datenanalyse oder Beobachtung des Automatisierungsverhaltens der industriellen Anlage erfolgen. Hier können auch Erfahrungswerte aus ähnlichen Anlagen zu Grunde gelegt werden.

Das Ergebnis der Berechnung des Signaldatensatzes kann vorteilhafterweise als Entscheidungsbaum in einer Datenstruktur gespeichert und übertragen werden. Wenn die funktional unabhängigen Teilmengen jeweils einen Ast des Baumes darstellen, dann ist insbesondere der Schritt der Abtrennung von nicht relevanten Teilmengen sehr einfach, in dem der jeweilige Ast gekappt wird. Die Baumstruktur hat weiterhin den Vorteil, dass jede Ebene einen Zeitschritt repräsentiert, was einfach verständlich ist. Bei der Abarbeitung kann so jeweils eine Ebene abgetrennt werden.

In diesem Fall kann das Ergebnis der Berechnung des Signaldatensatz direkt mit Zeitstempeln für jeden Ausführungs-Schritt des Automatisierungscodes versehen werden.

Dies ist insbesondere bei der diskreten Automatisierungssteuerung relevant, da die Ausführung des Automatisierungscodes üblicherweise schrittweise erfolgt. Zusätzlich auch nach dem Erreichen eines gesetzten Zeitstempels ein Ereignis ausgelöst werden, das die darauffolgende Abarbeitung der Logik beeinflusst.

Die Übertragung eines Signaldatensatzes kann auf verschiedene Weisen getriggert werden. Es kann beispielweise immer nach einer festgelegten Zeitdauer eine Aktualisierung gesendet werden, unabhängig davon, wie viele Schritte in der Automatisierungssteuerung seit der letzten Aktualisierung ausgeführt wurden. Dies ist sehr einfach realisierbar, weist aber ggf. Nachteile auf, insbesondere wenn die Zeitdauer ungünstig gewählt wurde und zu kurz ist (in der Anlage wurde noch kein weiterer Bearbeitungsschritt ausgeführt) oder zu lang (der Anweisungsspeicher wurde bereits vollständig abgearbeitet). Dann könnte die tatsächliche Situation in der Anlage bereits zu weit von der Simulation abweichen. Auch die Größe des dann zu übertragenden Signaldatensatzes könnte ungünstig sein. Dann bietet es sich an, eine Übertragung abhängig von der Berechnungstiefe des Signaldatensatzes oder auch nach der Größe der Datenstruktur des Signaldatensatzes anzustoßen.

Um die Größe eines Signaldatensatzes gering zu halten, kann in einer weiteren Ausführungsform der Erfindung nur die Differenz zwischen dem neu berechneten Signaldatensatz und dem vorherigen Signaldatensatz in der Übertragung enthalten sein.

Weiterhin kann natürlich eine Auswertung gemacht werden, wie gut die jeweiligen Simulationen die reale Situation in der Anlage jeweils abgebildet haben. Weiterhin vorteilhaft ist es dafür, nach Ausführung zumindest eines Schrittes des Automatisierungscodes in der Industriellen Anlage das Berechnungs-Modul eine Rückmeldung zu senden, welche die Auswirkung des Ausführungs-Schrittes auf die industrielle Anlage aufzeigt, und eine Neuberechnung des Signaldatensatzes (325) durchführt, basierend auf den in der Rückmeldung enthaltenen Daten.

Wenn eine solche Auswertung vorliegt, dann kann sie auch verwendet werden, um als nächsten Ausführungsschritt diejenige Operation zuerst zu berechnen, die die höchste Wahrscheinlichkeit aufweist, basierend auf der Wahrscheinlichkeitsrückmeldung früherer Ausführungen.

Dies verbessert ebenfalls das Ergebnis der vorher aufgezeigten Berechnungen.

Die Erfindung wird durch die Ausführungsbeispiele und die Figuren näher erläutert. Dabei zeigt
- Figur 1: einen Vergleich zwischen einer konventionellen und der neuartigen Architektur
- Figur 2: Die Simulation möglicher Status-Wechsel
- Figur 3: ein Ablaufdiagramm der Aktualisierungs-Kommunikation zwischen Gerät und Cloud
- Figur 4: Berechnung verschiedener Optionen desselben Schritts und ein Entscheidungsbaum
- Figur 5: die Kommunikation zwischen der Cloud und einer industriellen Anlage nach dem Stand der Technik

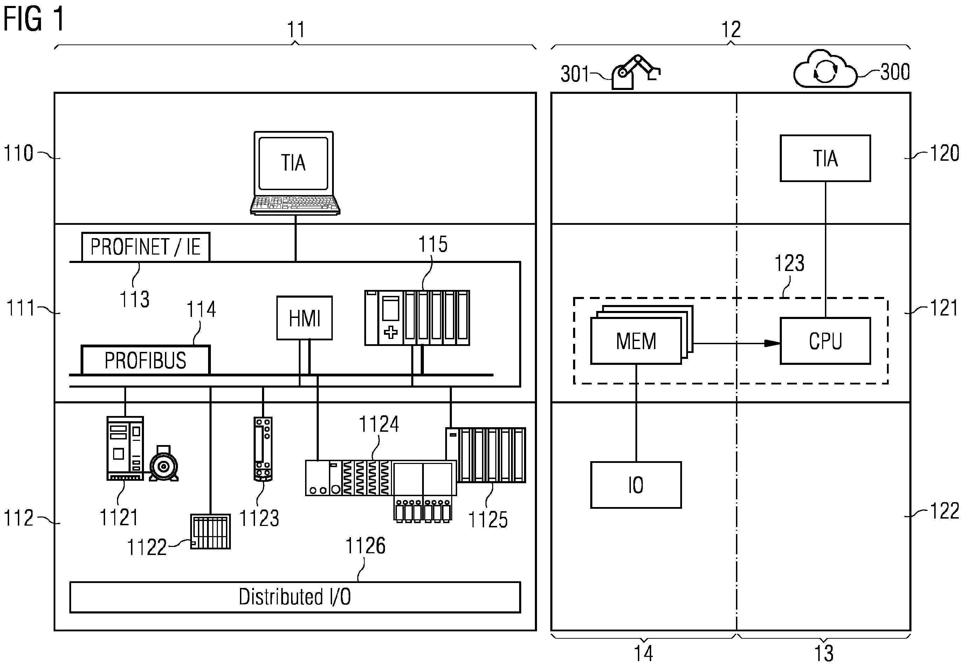

Figur 1 zeigt den Vergleich der vorgeschlagenen Architektur 12 mit einer konventionellen Architektur 11 eines Automatisierungssystems, so wie es derzeit auf dem Markt erhältlich ist. Der Management Level 110 umfasst die Engineering Station zur zentralen Projektierung der Automatisierungsanlage. Unten ist die Feldebene 112 mit verschiedenen Feldgeräten, wie Motoren oder andere Feldgeräte, welche die eigentlichen Aufgaben in einer industriellen Anlage übernehmen, wie das Fertigen von Waren.

Dazwischen geschaltet ist die Kontrollebene 111, wo auch die Schnittstelle, HMI, zum Bedienpersonal der Anlage angeordnet ist, und die Steuerung. Alles ist verknüpft über verschiedene Kommunikationsmedien, wie Profibus (zur Feldebene) und Profinet (zum Engineering).

Auf der rechten Seite 12 ist vereinfacht die neue Architektur aufgezeichnet. Die drei Ebenen existieren weiterhin, wobei die Feldebene 122 weiterhin auf der Anlagenseite 14 verortet ist, mit Ein- und Ausgabegeräten, IO. Diese Schicht unterscheidet sich nicht von der herkömmlichen Architektur links in der Figur.

Die Management-Ebene 120 mit dem Engineering System TIA (beispielsweise das "Totally Integration Automation" Portal von Siemens) befindet sich bei der hier aufgezeichneten Architektur ausschließlich außerhalb der realen Anlage, also beispielsweise in einer Cloud, 300. Die zwischengeschaltete Kontroll-Ebene 121 muss diese beiden Welten verbinden und beinhaltet eine übergreifende Steuerung 123, deren wesentliche Teile in der Cloud laufen, CPU, und zu einem untergeordneten Teil in der Anlage, MEM, hier in gegebenenfalls auch in mehreren Instanzen. Der untergeordnete Teil, MEM, verfügt über kein voll funktionsfähiges Rechenwerk, sondern lediglich über einen Befehlszeiger, der abhängig von der abhängig vom aktuellen Anlagenzustand (inkl. IO) einen der vorberechneten Nachfolgezustände auswählt.

Das Steuerungs-Modul in der Cloud, CPU, ist ausschließlich für die Berechnung der nächsten Schritte des Steuerungsprogramms zur Steuerung des Automatisierungsverhaltens zuständig, interagiert aber nicht mit der realen Hardware in der Feldebene, 122. Dieses Modul kann zentral an einem entfernten Standort (z. B. in der Cloud) ausgeführt werden. Es berechnet den nächsten Signalsatz an Steuersignalen im Voraus und sendet ihn an die Einheit zur Ausführung, beispielsweise in einem Edge Gerät, MEM. Die Einheit MEM ist dafür zuständig, den Signalsatz zu empfangen und je nach Zeitschritt an die reale Hardware IO zu senden. Daher wird auf diesem Gerät keine komplexe Berechnung durchgeführt und keine Berechnung auf dem Steuerungs-Modul CPU benötigt (nur das Kopieren von Registern ist zeitabhängig auf die I/O-Einheit).

Dieser Ansatz entspricht einem "Software as a Service-Ansatz", gekoppelt mit einer lokalen Simulation der Hardware, oder auch direkt auf der realen Hardware (die in der Praxis nicht durchgeführt wird). Die Herausforderung liegt nun darin, dass in einer industriellen Anlage die Echtzeitfähigkeit sichergestellt sein muss: ein reiner Cloud-Ansatz wird scheitern, sobald Signale nicht innerhalb der Zykluszeit der Steuerung geliefert werden können. Der neue Ansatz in dieser Hinsicht widerstandsfähig gemacht werden.

Dies kann erreicht werden, indem mögliche Ereignisse auf dem Steuerungs-Modul CPU als Entscheidungsbaum vorberechnet werden, der nach jedem Berechnungsschritt wiederholt kontinuierlich an das oder die Edge-Geräte MEM gesendet wird.

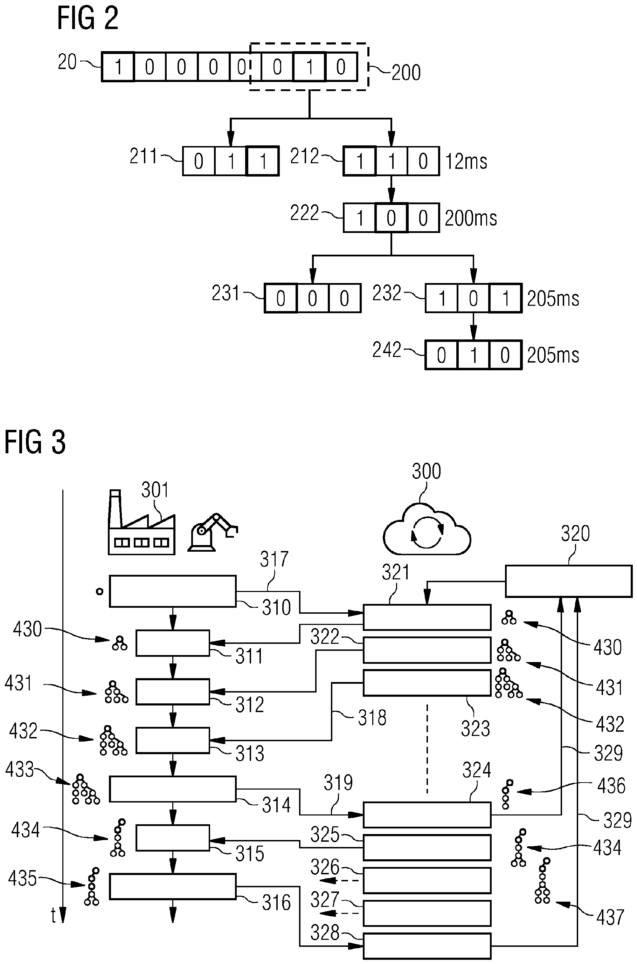

In Figur 2 ist dargestellt, wie mögliche Status-Änderungen simuliert werden. Der aktuelle Status der (realen) I/O-Register 20 der Edge Unit wird in das Cloud-Modul kopiert. Dies geschieht nach jeder Aktualisierung der Register. Hier beispielhaft dargestellt ist der gesetzte Wert 0 für "aus", 1 für "ein" - im Fall von IO. In einer alternativen Ausgestaltung schickt man nur die Änderung schicken, was gegenüber der Übertragung aller Werte noch effizienter ist, da sich häufig - wenn überhaupt - nur ein Wert ändert von Schritt zu Schritt. Andererseits würde eine solche Lösung eine Erweiterung auf non-binäre Werte erschweren. So können moderne Steuerung auch Int oder Float verarbeiten.

Nach dem Empfang beginnt das Steuerungs-Modul CPU mit der Simulation aller möglichen zukünftigen Konfigurationen, die sich aus dem empfangenen Status ergeben können. Um ein unnötiges kombinatorisches Wachstum des Entscheidungsbaums zu verhindern, werden unabhängige Teilmengen des SPS-Status identifiziert, 200. Dies kann beispielsweise aus Engineering- oder Verkabelungsplänen abgeleitet werden. In diesem Beispiel steuern drei der Signale 200 einen Roboter völlig unabhängig vom Zuführmechanismus, der von derselben SPS gesteuert wird. Die drei zugehörigen Bits im SPS-Register werden identifiziert, die gekoppelt werden sollen. Neben der Analyse von Plänen können diese Abhängigkeiten auch durch Datenanalyse festgestellt werden, z. B. durch längeres Beobachten der Produktions-Linie in einer Simulationsumgebung für verschiedene Anwendungsfälle, unter Einbeziehung der Zufälligkeit.

Nach der Identifizierung der relevanten Teilmengen werden für jede Teilmenge mögliche Folgekonfigurationen 211, 212, 222, ... mit dem Automatisierungscode simuliert (beispielsweise die Ankunft möglicher Eingangssignale, der-Ablauf eines Timers, Fehlerzustände etc.). Bei den Schritten ist dann jeweils ein beispielhafter Zeitstempel 12ms, 200ms, ... angegeben. Ausgehend von der identifizierten Teilmenge führt dies zu einem Entscheidungsbaum, der effizient in einer Datenstruktur (beispielsweise in JSON) für die spätere Übertragung gespeichert werden kann. In der Regel ist dieser Baum nicht vollständig mit Daten belegt, da mögliche Änderungen in der aktuellen Situation häufig nicht gleichzeitig auftreten werden. Neben dem neuen Status der SPS-Register fügt das Berechnungsmodul auch einen Zeitschritt hinzu, um Timer-Funktionen (z. B. Trigger-Aktion nach 450 ms) zu ermöglichen. Es wird eine Art Nachschlagetabelle in der Cloud generiert, und auf das Edge Gerät übertragen, auf dem Edge Gerät dann selber wird also nichts mehr berechnet, sondern der passende Nachfolgezustand wird, entsprechend dem aktuellen Zustand und IO, nur noch nachgeschlagen.

Sobald die nächste Tiefenebene 222 des Entscheidungsbaums berechnet ist, wird sie zur Ausführung an die Edge-Unit gesendet. Optional kann die Berechnung des Entscheidungsbaums nach Erreichen einer bestimmten Tiefe oder Größe gestoppt werden. Der vollständige Entscheidungsbaum wird sowohl für die Edge-Einheit als auch für die Berechnungseinheit gespeichert, aber Aktualisierungen werden entweder als absoluter Wert oder, wie oben bereits angedeutet, auch nur als Differenz zwischen nachfolgenden Änderungen im Baum gesendet.

Sobald der Entscheidungsbaum an die Einheit MEM gesendet wurde, beginnt die reale Hardware IO mit der Ausführung des Signaldatensatzes in der übertragenen Baumstruktur. Dazu holt er sich zunächst den Zeitschritt der nächsten Ebene im Entscheidungsbaum. Wenn der Zeitschritt abläuft, führt die Edge-Einheit die entsprechende Konfiguration im Baum aus. Neben dem Timing kann eine neue Ausführung auch durch das Eintreffen eines geänderten Signals am I/O-Register MEM ausgelöst werden. In diesem Fall wählt die Edge-Unit den nächsten Status aus, indem sie den Zweig im Entscheidungsbaum auswählt, der durch die entsprechende Signaländerung gekennzeichnet wurde, 231, 232.

Sobald ein neuer Status in der Edge-Einheit gesetzt wurde, sendet sie ein Update an die Berechnungseinheit (ggf. auch nur alle n Schritte), die nun alle Zweige außer dem ausgewählten ungültig macht und so den Entscheidungsbaum vor der weiteren Berechnung verdichten kann. Damit das System funktioniert, muss die Geschwindigkeit der Verbindung hoch genug sein, um eine schnellere Übertragung des Entscheidungsbaums als den Verbrauch der Daten durch die Edge-Einheit zu ermöglichen (im Durchschnitt über einen längeren Zeitraum, aber nicht unbedingt in jedem Zyklus). Da sich die Konnektivität in den nächsten Jahren weiter verbessern wird, kann diese Bedingung in immer mehr Anwendungsfällen erfüllt werden.

Figur 3 zeigt in einem Flussdiagramm den oben skizzierten Datenaustauschs zwischen dem der Industriellen Anlage 301 (auch Shop Floor genannt) und dem Berechnungs-Modul in der Cloud 300 im Detail. Um den Prozess zu initialisieren, sendet das Edge-Gerät 301 den initialen Status 310 der Factory-Assets 317 an die Cloud. Dazu könnte neben Signalen und Einstellungen auch ein sogenannter digitaler Zwilling, also eine digitale Abbildung bzw. Repräsentanz eines realen Objektes oder Prozesses der Fabrik, inklusive der zugehörigen Kommunikationsströme, für die weitere Simulation vor Ort gehören. Es kann jedoch sein, dass die meisten relevanten Assets von Anfang an bekannt sind und ein digitaler Zwilling bereits auf der Cloud-Seite vorhanden ist, so dass nur ein zusätzliches Status-Update erforderlich ist (z. B. das Senden von Gelenkwinkeln eines Roboters). Sobald die Cloud-Seite diese Daten und eine Anfrage zur Automatisierung erhält, beginnt sie, die möglichen nächsten Schritte auf der Anlagen-Seite zu simulieren und speichert sie wie oben erläutert in einer baumartigen Datenstruktur. Dafür wird der Automatisierungscode in einem Code Repository 320 vorgehalten. Die Schritte 321, 322 und 323 simulieren die Berechnung des Entscheidungsbaums 430, 431, 432 für die Schritte 1 bis 3. Der Entscheidungsbaum wird an das Edge-Gerät gesendet 311, 312, 313, sobald er berechnet wird. Es kommt aufgrund der Kommunikation zwischen Cloud und Edge mit einer Zeitverzögerung 318 beim Edge-Gerät an. Wenn die Berechnung eines Schritts sehr komplex ist oder viele Verzweigungen umfasst, wird die wahrscheinlichste nächste Operation zuerst berechnet, basierend auf der Wahrscheinlichkeitsrückmeldung früherer Ausführungen.

In Figur 3 sehen wir ein Beispiel, bei dem jeweils eine neue Version des Entscheidungsbaums 430, 431, 432 gesendet wird, bevor die erste Aktion 314 tatsächlich ausgeführt wird.

Nach der Ausführung des ersten Schrittes wird der aktuelle Status zurück an die Automatisierungssteuerung gemeldet, 319. Es wird nun der neue Status analysiert und alle Zweige des Entscheidungsbaums 434, die nicht genutzt werden, werden für ungültig erklärt und für die nachfolgenden Berechnungen nicht mehr verwendet. Daraufhin werden die nächsten Werte für die Schritte n+1, n+2 und n+3 berechnet, 325, 326, 327. In dem dargestellten Fall wird das nächste berechnete Ergebnis übertragen, und nach einem Update 315 der nächste Schritt 316 ausgeführt. Dies führt wiederum zur Aktualisierung des Entscheidungsbaums, welches an die Steuerung zurückgemeldet wird, 328.

Weiterhin kann nach jeder Rückmeldung von Entscheidungsbäumen mit ungültigen Zweigen eine Rückmeldung an das Code Repository 320 erfolgen, mit einer Aussage zu einer Wahrscheinlichkeitsrückmeldung, zur Verbesserung der Berechnungen.

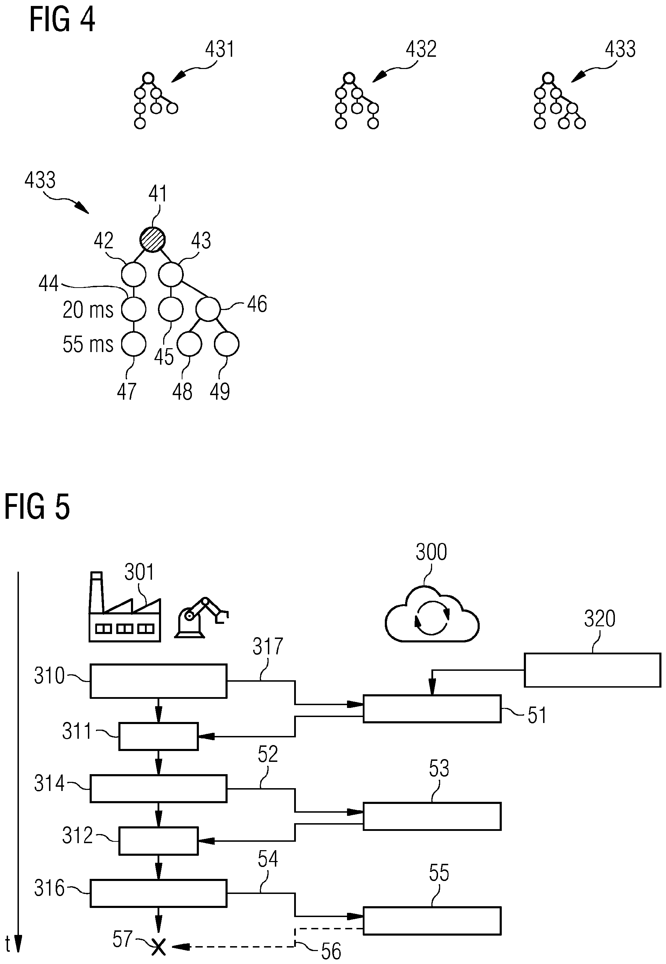

Figur 4 zeigt diese Situation in einem Entscheidungsbaum 33, in der der aktuelle Status 41 markiert ist. Nach dem Empfang des "Robot on"-Signals 42 auf dem IO-Modul sucht das Edge-Gerät basierend auf der Statusänderung die nächste Aktion im Entscheidungsbaum. Der andere Zweig 43 des Entscheidungsbaumes befasst sich beispielsweise mit einem Signal "Emergency off". Auch hier sind jeweils Zeitstempel 20 ms, 55 ms) für jeden Ausführungsschritt vorgesehen.

In diesem Fall könnte das Signal z. B. den Start aller Roboter und Förderbänder auslösen. Diese Statusänderung in der eigentlichen Fabrik wird sofort in die Cloud gesendet. Hier werden alle anderen Zweige im Entscheidungsbaum (mit Ausnahme des verwendeten) ungültig, also hier die Knoten 43, 45, 46, 48, 49. Nur Zweige unter dem entnommenen Knoten 42 werden weiter berechnet (bzw. an das Edge-Gerät gesendet), in dem dargestellten Beispiel 44 und 47. Darüber ist dargestellt, wie der Entscheidungsbaum in den Schritten 3a, 3b und 3c weiter berechnet wird 431, 432, 433.

Die Berechnung von parallelen Verzweigungen und Aktionen kann gut in der Cloud-Umgebung (z. B. in einer Multi-GPU-Umgebung) parallelisiert werden, wogegen die Parallelisierungsmöglichkeiten auf den Geräten in der Industriellen Umgebung in der Regel begrenzt sind.

Ein weiterer Vorteil des vorgeschlagenen Verfahrens zum Stand der Technik, wie er in der Figur 5 dargestellt ist, ist eine erhöhte Resilienz gegenüber Netzwerkverbindungsproblemen. Während der Stand der Technik auf einer Verbindung beruht, die zuverlässig und schnell genug ist, um neue Signale direkt zwischen der Cloud und der Edge-Einheit zu senden, beruht die vorgeschlagene Methode nur auf einer bestimmten Durchschnittsgeschwindigkeit, lässt aber Unterbrechungen und Jitter in der Verbindung zu, indem Zustände im Voraus berechnet werden. Sobald eine verzögerte Übertragung vorliegt, kann auf bereits vorberechnete Stati zurückgegriffen werden.

In Figur 5 ist eine Anordnung nach dem Stand der Technik dargestellt. Hier würde die Automatisierungssteuerung-Lösung in der Cloud die nächste Entscheidung nur durch eine Schritt-für-Schritt-Kommunikation liefern:
Nach der Aufforderung 317, 52, 54 wird eine Berechnung des jeweils nächsten Schritts 51, 53, 55 durchgeführt. Diese wird an die Anlage zurück geliefert, 311, 312, dann wird der nächste Schritt ausgeführt 314. Es erfolgt jeweils eine Entscheidung als Antwort auf eine Statusänderung.

In diesem Fall fällt das gesamte System aus, wenn die Kommunikation zwischen Cloud und Edge zu lange verzögert wird, 56, beispielsweise wenn das Material bereits vom Förderband abgeladen wurde und der Roboter es nicht mehr aufnehmen kann. Wie bereits erwähnt, ist die Intention von bisherigen Lösungen nicht die Automatisierung realer Fabriken, sondern dient nur Simulationszwecken, da es die Anforderungen einer realen Anlage an die Echtzeitfähigkeit derzeit nicht erfüllen kann. Auf Basis der vorgeschlagenen Lösung wären jedoch Lösungen realisierbar für eine reale Industrielle Anlage, durch die Einführung eines Cache, der widerstandsfähig gegen Netzwerkverzögerungen ist und in dem mögliche Ausführungsschritte des Automatisierungscodes jederzeit vorgehalten werden.

## Patentansprüche

1. Vorrichtung (12) zur verteilten Durchführung einer Automatisierungssteuerung, umfassend einen Automatisierungscode (320) mit Ausführungsschritten, für eine industrielle Anlage (IO, 301),
wobei die Vorrichtung eine Kontrollebene (121) aufweist, mit
- einem Berechnungs-Modul (CPU) für die Berechnung der nächsten Schritte des Automatisierungsverhaltens, in Form von Statuswerten
wobei das Berechnungs-Modul außerhalb der industriellen Anlage angeordnet ist, insbesondere in einer Cloud Umgebung, und ausgebildet und eingerichtet ist um
eine funktional unabhängige Teilmenge (200) im Automatisierungscode zu identifizieren und für jede identifizierte funktional unabhängige Teilmenge den Automatisierungscodes mehrere Ausführungsschritte im Voraus zu berechnen (321, 322, 323) und als Signaldatensatz (40) abzuspeichern,
indem für jede funktional unabhängige Teilmenge des Automatisierungscode im Automatisierungssteuerung-Status mögliche Folgekonfigurationen (211, 212, 222, ...) mit dem Automatisierungscode simuliert werden, für die nächsten Ausführungsschritte der Automatisierungssteuerung,
- und ausgebildet und eingerichtet ist, den Signaldatensatz an (40) ein Ausführungs-Modul (MEM) zu senden (318), das dafür eingerichtet und ausgebildet ist, den Signaldatensatz (40) vom Berechnungsmodul zu empfangen und in der industriellen Anlage (IO, 301) auszuführen.

2. Vorrichtung gemäß Patentanspruch 1, **dadurch gekennzeichnet, dass** die Ableitung der funktional unabhängigen Teilmenge (200) unter Verwendung von Informationen zu der industriellen Anlage (IO) aus verfügbaren Engineering-Daten (TIA) oder Verkabelungsplänen zu der industriellen Anlage (IO) erfolgt.

3. Vorrichtung gemäß Patentanspruch 1, **dadurch gekennzeichnet, dass** die Ableitung der funktional unabhängigen Teilmenge (200) durch Datenanalyse oder Beobachtung des Automatisierungsverhaltens der industriellen Anlage (IO), erfolgt.

4. Vorrichtung gemäß einem der vorherigen Patentansprüche, **dadurch gekennzeichnet, dass** das Ergebnis der Berechnung des Signaldatensatzes (40) als Entscheidungsbaum in einer Datenstruktur speicherbar, übertragbar und verarbeitbar ist.

5. Vorrichtung gemäß einem der vorherigen Patentansprüche, **dadurch gekennzeichnet, dass** das Ergebnis der Berechnung des Signaldatensatz (40) Zeitstempel für jeden Ausführungs-Schritt des Automatisierungscodes (320) enthält.

6. Vorrichtung gemäß einem der vorherigen Patentansprüche, **dadurch gekennzeichnet, dass** die Übertragung eines Signaldatensatzes (40) getriggert wird durch einen Zeitpunkt oder nach Berechnungstiefe des Signaldatensatzes (40) oder nach der Größe der Datenstruktur des Signaldatensatzes (40).

7. Vorrichtung gemäß einem der vorherigen Patentansprüche, **dadurch gekennzeichnet, dass** eine Übertragung (315) eines neu berechneten Signaldatensatzes (40) nur die Differenz zwischen dem neu berechneten Signaldatensatz (434) und dem vorherigen Signaldatensatz (432) beinhaltet.

8. Vorrichtung gemäß einem der vorherigen Patentansprüche, **dadurch gekennzeichnet, dass** nach Ausführung zumindest eines Schrittes des Automatisierungscodes in der Industriellen Anlage (IO, 301) das Berechnungs-Modul (CPU) eine Rückmeldung (319, 329) erhält welche die Auswirkung des Ausführungs-Schrittes auf die industrielle Anlage aufzeigt, und eine Neuberechnung des Signaldatensatzes (325) durchführt, basierend auf den in der Rückmeldung enthaltenen Daten.

9. Vorrichtung gemäß einem der vorherigen Patentansprüche, **dadurch gekennzeichnet, dass** als nächster Ausführungsschritte diejenige Operation zuerst berechnet wird, die die höchste Wahrscheinlichkeit aufweist, basierend auf der Wahrscheinlichkeitsrückmeldung früherer Ausführungen.

10. Verfahren zur verteilten Durchführung einer Automatisierungssteuerung, umfassend einen Automatisierungscode (320) mit Ausführungsschritten, für eine industrielle Anlage (IO, 301), wobei
- eine funktional unabhängige Teilmenge (200) im Automatisierungscode identifiziert wird und
- für jede identifizierte funktional unabhängige Teilmenge den Automatisierungscodes mehrere Ausführungsschritte im Voraus berechnet (321, 322, 323) und als Signaldatensatz (40) abgespeichert werden, indem für jede funktional unabhängige Teilmenge des Automatisierungscode im Automatisierungssteuerung-Status mögliche Folgekonfigurationen (211, 212, 222, ...) mit dem Automatisierungscode simuliert werden, für die nächsten Ausführungsschritte der Automatisierungssteuerung,
- und der Signaldatensatz (40) an ein Ausführungs-Modul (MEM) gesendet wird (318), zur Ausführung des Signaldatensatz (40) durch ein Berechnungsmodul in der industriellen Anlage (IO, 301).

11. Verfahren gemäß Patentanspruch 10, **dadurch gekennzeichnet, dass** die funktional unabhängige Teilmenge (200) unter Verwendung von Informationen zu der industriellen Anlage (IO) aus verfügbaren Engineering-Daten (TIA) oder Verkabelungsplänen zu der industriellen Anlage (IO) ermittelt wird.

12. Verfahren gemäß Patentanspruch 10, **dadurch gekennzeichnet, dass** die funktional unabhängige Teilmenge (200) durch Datenanalyse oder Beobachtung des Automatisierungsverhaltens der industriellen Anlage (IO), ermittelt wird.

13. Verfahren gemäß einem der vorherigen Patentansprüche 10 bis 12, **dadurch gekennzeichnet, dass**
das Ergebnis der Berechnung des Signaldatensatzes (40) als Entscheidungsbaum in einer Datenstruktur gespeichert und übertragen wird.

14. Verfahren gemäß einem der vorherigen Patentansprüche 10 bis 13, **dadurch gekennzeichnet, dass**
das Ergebnis der Berechnung des Signaldatensatz (40) Zeitstempel für jeden Ausführungsschritt des Automatisierungscodes (320) enthält.

15. Verfahren gemäß einem der vorherigen Patentansprüche 10 bis 14, **dadurch gekennzeichnet, dass**
die Übertragung eines Signaldatensatzes (40) getriggert wird durch einen Zeitpunkt oder nach Berechnungstiefe des Signaldatensatzes (40) oder nach der Größe der Datenstruktur des Signaldatensatzes (40).

16. Verfahren gemäß einem der vorherigen Patentansprüche 10 bis 15, **dadurch gekennzeichnet, dass**
die Übertragung (315) eines neu berechneten Signaldatensatzes (40) nur die Differenz zwischen dem neu berechneten Signaldatensatz (434) und dem vorherigen Signaldatensatz (432) enthält.

17. Verfahren gemäß einem der vorherigen Patentansprüche 10 bis 16, **dadurch gekennzeichnet, dass**
nach Ausführung zumindest eines Schrittes des Automatisierungscodes in der Industriellen Anlage (IO, 301) das Berechnungs-Modul (CPU) eine Rückmeldung (319, 329) erhält, welche die Auswirkung des Ausführungsschrittes auf die industrielle Anlage aufzeigt und eine Neuberechnung des Signaldatensatzes (325) durchführt, basierend auf den in der Rückmeldung enthaltenen Daten.

18. Verfahren gemäß einem der vorherigen Patentansprüche 10 bis 17, **dadurch gekennzeichnet, dass**
als nächster Ausführungsschritt diejenige Operation zuerst berechnet wird, die die höchste Wahrscheinlichkeit aufweist, basierend auf der Wahrscheinlichkeitsrückmeldung früherer Ausführungen.

19. Computerprogrammprodukt zur Durchführung der Schritte eines Verfahrens gemäß den Merkmalen eines der Patentansprüche 10 bis 18.
